# EUROPEAN PATENT SPECIFICATION

(11) **EP 2 774 820 B1**
(45) Date of publication and mention of the grant of the patent: **23.04.2025**
(21) Application number: 14158406.0
(22) Date of filing: 07.03.2014
(51) Int. Cl.: B60S 1/16

(54) **HOUSING FOR A WINDSCREEN WIPER MOTOR, METHOD FOR PRODUCING A HOUSING FOR A WINDSCREEN WIPER MOTOR, AND WINDSCREEN WIPER MOTOR**
GEHÄUSE FÜR EINEN SCHEIBENWISCHERMOTOR, VERFAHREN ZUR HERSTELLUNG EINES GEHÄUSES FÜR EINEN SCHEIBENWISCHERMOTOR UND SCHEIBENWISCHERMOTOR
BOÎTIER DESTINÉ À UN MOTEUR D'ESSUIE-GLACE, PROCÉDÉ DE FABRICATION D'UN TEL BOÎTIER ET MOTEUR D'ESSUIE-GLACE

(30) Priority: 08.03.2013 DE 102013102340
(43) Date of publication of application: 10.09.2014
(73) Proprietor: Valeo Wischersysteme GmbH, 74321 Bietigheim-Bissingen (DE)
(72) Inventor: Stefani, Siegfried, 71739 Oberriexingen (DE); Hartman, Werner, 71665 Vaihingen/Enz (DE); Kapitza, Harald, 71640 Ludwigsburg (DE); Stapf, Alexander, 74172 Neckarsulm-Dahenfeld (DE)
(74) Representative: Valeo Visibility

(56) References cited:
- DE-A1- 102011 076 560
- US-A- 4 699 293
- US-A1- 2008 029 972
- US-B1- 6 579 487

## Description

### Technical field.

The invention relates to a housing for a windscreen wiper motor as per the preamble of Claim 1. Furthermore, the invention relates to a method for producing a housing for a windscreen wiper motor, and to a windscreen wiper motor that uses a housing according to the invention.

### Background art.

A housing for a windscreen wiper motor as per the preamble of Claim 1 is already known from practice. The known housing has two housing parts, wherein one of the two housing parts is in the form of a housing cover and is connected to the other housing part in order to form a closed, sealed-off housing of a windscreen wiper motor. The two housing parts are connected to one another with the interposition of a sealing element in order to prevent the ingress of media, in particular of moisture, into the housing interior. The connection of the two housing parts is realized in practice by means of multiple fastening screws. In the known housing, the housing cover has a recess for receiving the sealing element, wherein the sealing element is composed of a thermoplastic elastomer which additionally has adhesive additives. Said adhesive additives are required because the sealing element is injected into, and fills out, the recess of the cover that has been produced previously in an injection-moulding process in a first manufacturing step. Owing to the different characteristics of the materials for the housing cover and for the seal element, the sealing element would not remain adhered in the recess without said adhesive additives, which in particular could lead to the sealing element adopting an undefined position within the recess, thus for example impairing the subsequent assembly of the two housing parts and the reliability of the sealing action. A disadvantage here is that the use of the adhesive additive in the material for the sealing element, which makes it possible for the sealing element to be fixed in the recess without other components, has an adverse effect on the sealing characteristics of the sealing element.

Other examples of housing for a windscreen wiper motor are described in the documents US6579487 and US4699293.

### Disclosure of the invention

Taking the presented prior art as a starting point, the invention is based on the object of further developing a housing for a windscreen wiper motor as per the preamble of Claim 1 such that the sealing element of said housing is fixed in the recess in the housing part even without the use of adhesive additives for the sealing element and without the use of additional components. In this way, the sealing characteristics of the sealing element are positively influenced, and thus the sealing function is improved. Said object is achieved according to the invention, in the case of a housing for a windscreen wiper motor having the features of Claim 1, in that the recess is designed such that a positively locking connection is formed between the sealing element, which is arranged in the recess, and the housing part. Such a positively locking connection makes it possible for the sealing element to be fixed and positioned within the recess without the use of additional components or adhesive additives, which eliminates the above-mentioned disadvantages of the prior art.

Advantageous refinements of the housing according to the invention for a windscreen wiper motor are specified in the subclaims.

According to the invention, it is proposed that the recess is of groove-like form, and that, in order to form the positively locking connection, the cross section of the recess widens or narrows at least in regions between a mouth region of the recess and a groove base. Such a groove-like recess is in this case formed, in particular in the connecting region, as a closed, that is to say encircling recess or groove in order to obtain a closed sealing contour between the two housing parts that are connected to one another.

According to the present invention, the cross section of the recess has a plane of symmetry.

In this way, any tensile or detachment forces that may be transmitted to the sealing element are distributed uniformly over the cross section of the recess and of the sealing element, such that local stress peaks with corresponding deformations of the sealing element, which could possibly otherwise lead to detachment of the sealing element from the recess, are reduced or eliminated.

According to the present invention, it is proposed that the cross section of the recess is at least substantially rectangular and comprises two planar side walls from which there extend, in an intermediate region, two elevations, wherein the elevations are spaced apart from the groove base. Therefore the recess can be implemented in a particularly simple manner from a manufacturing aspect.

In particular, it may be provided that the at least one elevation is in the form of a convex rounded formation. Such a convex rounded formation has the advantage that, owing to the omission of sharp-edged regions, any mechanical load that may be exerted on the sealing element is reduced. Furthermore, such a rounded form also facilitates the removal of the housing part from an injection-moulding tool.

In a further design refinement of the recess, it is proposed that the groove base is of convexly domed form. Such a form additionally improves the removal of the housing part from its injection-moulding tool.

Furthermore, the removal of the housing part from an injection-moulding tool is made easier if the recess is formed on a housing wall which is, at least in the region of the recess, elastically deformable in a plane perpendicular to the recess. In this way, it is made possible for the injection-moulding tool, which, to form the recess, has in the region of the recess a (web-like) cross section corresponding to the recess, to be pulled out of the recess, wherein the housing wall can deflect elastically perpendicular to the pulling-out direction of the tool. This is of significance in particular in conjunction with the recess which has a varying cross section at the side walls.

The formation of a positively locking connection between the sealing element and the recess and the housing part makes it possible in particular to dispense with adhesive additives in the material of the sealing element, whereby the sealing characteristics of said sealing element are improved.

The invention also encompasses a method for producing a housing for a windscreen wiper, wherein, in a first manufacturing step, a housing with a recess is manufactured from plastic in an injection moulding process, and wherein subsequently, a sealing element is inserted into the recess in a second manufacturing step. It is provided according to the invention that, after the second manufacturing step, the sealing element is held in the recess by means of a positively locking connection. Such a method according to the invention also makes it possible, for example, for a sealing element which is produced in a separate tool, and which is provided as a prefabricated sealing element, to be subsequently fastened in the recess in the second manufacturing step, in particular by being pushed or pressed in. Even in this case, with a prefabricated sealing element, secure retention of the sealing element on the housing part is achieved by means of the positively locking connection.

In a very particularly preferred refinement of the invention, it is however also provided that, in the second manufacturing step, to form the sealing element, a liquefied, thermoplastic elastomer is injected into the recess. In this way, it is possible in particular to generate virtually any desired positive-locking geometries between the sealing element and the recess and/or the housing part because, owing to the fact that the sealing element is formed directly in the recess of the housing part, it is possible to dispense with a manufacturing process, that would otherwise take place in a separate tool, for the sealing element.

Finally, the invention encompasses a windscreen wiper motor that uses a housing according to the invention. A windscreen wiper motor of said type has the advantage that the components arranged in the housing of the windscreen wiper motor are protected in a particularly effective manner against the ingress of media into the housing.

Further advantages, features and details of the invention will emerge from the following description of preferred exemplary embodiments and from the drawing, in which:
- Figure 1: shows, in a perspective view, a windscreen wiper motor that uses a housing according to the invention,
- Figure 2: shows, in a perspective illustration, a housing cover such as is used in the case of a housing for the windscreen wiper motor as per Figure 1, and
- Figure 3: shows a section through the connecting region between a housing cover and a gearing housing of the windscreen wiper motor.

In the figures, identical elements or elements of identical function are denoted by the same reference numerals.

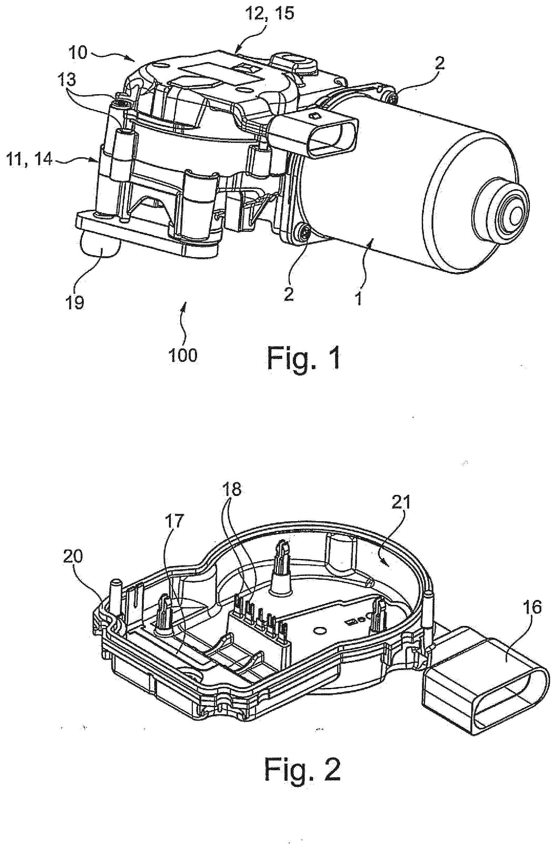

Figure 1 illustrates a windscreen wiper motor 100 such as is used in particular in a motor vehicle for the at least indirect actuation of windscreen wipers. The windscreen wiper motor 100 has a drive motor 1 in the form of an electric motor, which is flange-mounted on a housing 10 according to the invention of the windscreen wiper motor 100 by means of fastening screws 2. The housing 10 serves for accommodating a gearing (not illustrated in the figures) which serves for transmitting the drive input rotational speed of the drive motor 1, with a simultaneous increase of the torque thereof, to a drive output element 19 which projects out of the housing 10 and which serves for the actuation of the one or more windscreen wipers.

In the exemplary embodiment illustrated, the housing 10 is of two-part form and is composed of a first housing part 11, in which substantially the said gearing is arranged, and a second housing part 12, which is connected to the first housing part 11 by means of further fastening screws 13. The first housing part 11 is of substantially pot-shaped form and is also referred to as gearing housing 14, whereas the second housing part 12, corresponding to the illustration in Figure 2, is of substantially shell-shaped form and forms a housing cover 15. Also formed on the housing cover 15 is a connection socket 16 which serves for the electrical contacting and actuation of the drive motor 1 via a wiring loom of the vehicle.

The housing part 11 of the housing 10 is preferably composed of aluminium and is formed as a pressure die casting, whereas the housing part 12 or the housing cover 15 is composed of plastic and is formed as an injection moulded part. Such a form of the housing cover 15 makes it possible in a particularly simple manner for the housing cover 15 to have arranged therein conductor paths 17 or contact tabs 18, which serve for example for the electrical contacting of the drive motor 1 and which have been manufactured beforehand in a separate tool as punched/bent elements and which, during the formation of the housing cover 15, are placed into the injection moulding tool which forms the housing cover 15.

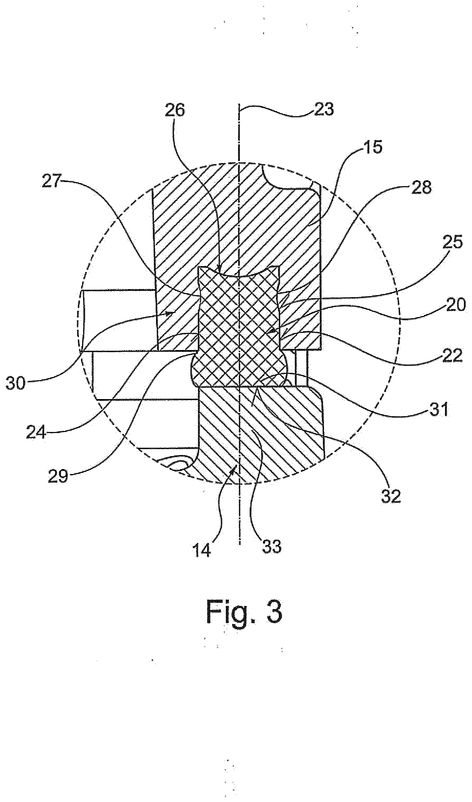

To prevent media such as vapours, moisture or the like from ingressing into the interior of the housing 10, and for example damaging electrical or electronic components provided therein, during operation after the assembly of the windscreen wiper motor 100, a seal element 20 as shown in Figures 2 and 3 is arranged in the connecting region between the two housing parts 11, 12.

The sealing element 20 is composed of a thermoplastic elastomer and, in particular, has no adhesive additives such as may be used in the prior art to increase adhesion between a sealing element 20 and a housing part 11, 12 composed of plastic. In the exemplary embodiment illustrated, the sealing element 20 is connected to, and/or arranged partially in, the housing cover 15. For this purpose, the housing cover 15 has, on the face side of an encircling, closed housing wall 21, a likewise encircling, that is to say closed, groove-shaped recess 22, as can be seen from Figure 3. It can likewise be seen from Figure 3 that the recess 22 in the housing cover 15 has a substantially rectangular form with a plane of symmetry 23.

The recess 22 has two planar side walls 24, 25 arranged parallel to one another, and on the side opposite the mouth region 29 of the recess 22, a groove base 26 which is of domed, in particular convexly domed form. Close to the groove base 26, but axially spaced apart therefrom, two in each case convexly domed elevations 27, 28 project from the two side walls 24, 25 in the direction of the plane of symmetry 23. The recess 22 thus has a reduced cross section (in the direction perpendicular to the plane of symmetry 23) in the region of the elevations 27, 28. The two elevations 27, 28 serve for the formation of a positively locking connection 30 between the sealing element 20 and the housing cover 15.

It can be seen from Figure 3 that, with respect to the plane of symmetry 23, the sealing element 20 is arranged with only a sub-region, which in the illustrated exemplary embodiment amounts to up to approximately half of the sealing element, within the recess 22, whereas a sub-region 31 of the sealing element 20 that projects out of the recess 22 bears, on the side facing away from the housing cover 15, against a planar face surface 32 of the first housing part 11 or of the gearing housing 14, and is deformed in a barrelled manner so as to generate the sealing action.

To produce the housing cover 15 with the sealing element 20 which is arranged therein by means of the positively locking connection 30, in a first manufacturing step, the second housing part 12 or the housing cover 15 is produced in an injection-moulding tool, wherein, as discussed, the conductor paths 17 and the contact tabs 18 are also placed into the injection-moulding tool. During the removal of the housing part 12 from its tool, the wall regions to both sides of the elevations 27, 28 deflect elastically in a direction perpendicular to the plane of symmetry 23 in order to release the web-like element that forms the recess 22. In the housing cover 15 thus formed, the sealing element 20 is subsequently generated or produced in the recess 22 by injection of the liquid thermoplastic elastomer, preferably using the injection-moulding tool. Here, the material of the sealing element 20 fills out the entire recess 22. After the sealing element 20 has solidified, said sealing element is received and fixed in the recess 22 of the housing cover 15 by means of the positively locking connection 30.

The housing 10 thus described for a windscreen wiper motor 100 may be changed or modified in a variety of ways without departing from the concept of the invention. Accordingly, it is for example conceivable for the recess 22 to be arranged not in the housing cover 15 but rather in the gearing housing 14. Owing to its simpler form, it is however preferable for the sealing element 20 to be arranged in the housing cover 15. Furthermore, the positively locking connection 30 between the sealing element 20 and the recess 22 does not have to be realized over the entire length or extent of the recess 22; rather, it is sufficient for a positively locking connection 30 to be formed only over a sub-region of the recess 22. Also, the form of the positively locking connection 30, that is to say the form of the elevations 27, 28, is not restricted to the elevations 27, 28 that project in the direction of the plane of symmetry 23; rather, it is also possible instead of elevations 27, 28 for depressions to be provided on the side walls 24, 25 in a similar fashion. It is essential merely that the cross section of the recess 22 widens or narrows at least in regions in the direction of the groove base.

### List of reference numerals

- 1: Drive motor
- 2: Fastening screw

- 10: Housing
- 11: Housing part
- 12: Housing part
- 13: Fastening screw
- 14: Gearing housing
- 15: Housing cover
- 16: Connection socket
- 17: Conductor path
- 18: Contact tab
- 19: Drive output element
- 20: Sealing element
- 21: Housing wall
- 22: Groove-like recess
- 23: Plane of symmetry
- 24: Side wall
- 25: Side wall
- 26: Groove base
- 27: Elevation
- 28: Elevation
- 29: Mouth region
- 30: Positively locking connection
- 31: Sub-region
- 32: Face surface
- 33: Face surface

- 100: Windscreen wiper motor

## Claims

1. Housing (10) for a windscreen wiper motor (100), wherein the housing (10) is composed of at least two housing parts (11, 12) that can be connected to one another, said housing (100) comprising a sealing element (20) and wherein said sealing element (20) composed of elastic material is arranged in the connecting region between the two housing parts (11, 12), which sealing element is at least partially received in a recess (22) in one of the two housing parts (11, 12), the recess (22) being designed such that a positively locking connection (30) is formed between the sealing element (20), which is arranged in the recess (22) of one housing part (12), wherein the recess (22) is of groove-like form, and the cross section of the recess (22) having a plane of symmetry (23) and being at least substantially rectangular and comprises two planar side walls (24, 25) from which there extends two elevations (27, 28) and wherein the two elevations (27, 28) are spaced apart from the groove base (26).
**characterized**
**in that**, with respect to the plane of symmetry (23), the sealing element (20) comprises a sub-region (31) which projects out of the recess (22), the sub-region (31) bearing, on a side facing away from a second housing part (12), against a planar surface (32) of a first housing part (11) and the sub-region (31) being deformed in a barrelled manner so as to generate the sealing action,
**in that**, in order to form the positively locking connection (30), the cross section of the recess (22) widens or narrows at least in regions between a mouth region (29) of the recess (22) and a groove base (26).

2. Housing according to Claim 1, **characterized**
**in that** the at least one elevation (27, 28) is in the form of a convex rounded formation.

3. Housing according to one of Claims 1 to 2, **characterized**
**in that** the groove base (26) is of convexly domed form.

4. Housing according to one of Claims 1 to 3, **characterized**
**in that** the recess (22) is formed on a housing wall (21) of the housing part (12), which housing wall is, at least in the region of the recess (22), elastically deformable in a plane perpendicular to the recess (22).

5. Housing according to one of Claims 1 to 4, **characterized**
**in that** the sealing element (20) does not comprise any adhesive agents.

6. Method for producing a housing (10) for a windscreen wiper motor (100) according to one of Claims 1 to 5, wherein, in a first manufacturing step, a housing part (12) with a recess (22) is manufactured from plastic in an injection moulding process, and wherein subsequently, a sealing element (20) is inserted into the recess (22) in a second manufacturing step,
**characterized**
**in that**, after the second manufacturing step, the sealing element (20) is held in the recess (20) by means of a positively locking connection (30).

7. Method according to Claim 6, **characterized**
**in that**, in the second manufacturing step, to form the sealing element (20), a liquefied, thermoplastic, non-adhesive elastomer is injected into the recess (22).

8. Windscreen wiper motor (100) having a housing (10) according to one of Claims 1 to 5.

## Patentansprüche

1. Gehäuse (10) für einen Scheibenwischermotor (100), wobei das Gehäuse (10) aus mindestens zwei miteinander verbindbaren Gehäuseteilen (11, 12) besteht, wobei das Gehäuse (100) ein Dichtungselement (20) umfasst und wobei das aus elastischem Material bestehende Dichtelement (20) im Verbindungsbereich zwischen den beiden Gehäuseteilen (11, 12) angeordnet ist, wobei das Dichtungselement zumindest teilweise in einer Ausnehmung (22) in einem der beiden Gehäuseteile (11, 12) aufgenommen ist, wobei die Ausnehmung (22) derart ausgebildet ist, dass zwischen dem in der Ausnehmung (22) eines Gehäuseteils (12) angeordneten Dichtungselement (20) eine formschlüssige Verbindung (30) gebildet ist, wobei die Ausnehmung (22) eine nutartige Form aufweist und der Querschnitt der Ausnehmung (22) eine Symmetrieebene (23) aufweist und zumindest im Wesentlichen rechteckig ist und zwei ebene Seitenwände (24, 25) umfasst, von denen sich zwei Erhebungen (27, 28) erstrecken, und wobei die zwei Erhebungen (27, 28) vom Nutgrund (26) beabstandet sind, **dadurch gekennzeichnet,**
**dass** bezogen auf die Symmetrieebene (23) das Dichtungselement (20) einen aus der Ausnehmung (22) herausragenden Teilbereich (31) umfasst, wobei der Teilbereich (31) auf einer einem zweiten Gehäuseteil (12) abgewandten Seite an einer ebenen Fläche (32) eines ersten Gehäuseteils (11) anliegt und der Teilbereich (31) zur Erzeugung der Dichtwirkung auf tonnenartige Weise verformt ist,
**dass** sich zur Bildung der formschlüssigen Verbindung (30) der Querschnitt der Ausnehmung (22) zumindest in Bereichen zwischen einem Mündungsbereich (29) der Ausnehmung (22) und einem Nutgrund (26) verbreitert oder verengt.

2. Gehäuse nach Anspruch 1, **dadurch gekennzeichnet, dass** die mindestens eine Erhebung (27, 28) in Form einer konvexen gerundeten Ausbildung vorliegt.

3. Gehäuse nach einem der Ansprüche 1 bis 2, **dadurch gekennzeichnet,**
**dass** der Nutgrund (26) eine konvex gewölbte Form aufweist.

4. Gehäuse nach einem der Ansprüche 1 bis 3, **dadurch gekennzeichnet,**
**dass** die Ausnehmung (22) auf einer Gehäusewand (21) des Gehäuseteils (12) ausgebildet ist, wobei die Gehäusewand zumindest im Bereich der Ausnehmung (22) in einer Ebene senkrecht zur Ausnehmung (22) elastisch verformbar ist.

5. Gehäuse nach einem der Ansprüche 1 bis 4, **dadurch gekennzeichnet,**
**dass** das Dichtungselement (20) keine Haftmittel enthält.

6. Verfahren zur Herstellung eines Gehäuses (10) für einen Scheibenwischermotor (100) nach einem der Ansprüche 1 bis 5, wobei in einem ersten Herstellungsschritt ein Gehäuseteil (12) mit einer Ausnehmung (22) in einem Spritzgussverfahren aus Kunststoff hergestellt wird, und wobei anschließend in einem zweiten Herstellungsschritt ein Dichtungselement (20) in die Ausnehmung (22) eingesetzt wird,
**dadurch gekennzeichnet,**
**dass** nach dem zweiten Herstellungsschritt das Dichtungselement (20) mittels einer formschlüssigen Verbindung (30) in der Ausnehmung (20) gehalten wird.

7. Verfahren nach Anspruch 6, **dadurch gekennzeichnet, dass** in dem zweiten Herstellungsschritt zur Bildung des Dichtungselements (20) ein verflüssigtes, thermoplastisches, nicht haftendes Elastomer in die Ausnehmung (22) eingespritzt wird.

8. Scheibenwischermotor (100) mit einem Gehäuse (10) nach einem der Ansprüche 1 bis 5.

## Revendications

1. Boîtier (10) destiné à un moteur d'essuie-glace (100), le boîtier (10) étant composé d'au moins deux parties de boîtier (11, 12) qui peuvent être reliées l'une à l'autre, ledit boîtier (100) comprenant un élément d'étanchéité (20) et ledit élément d'étanchéité (20) composé de matériau élastique étant disposé dans la région de liaison entre les deux parties de boîtier (11, 12), lequel élément d'étanchéité est au moins partiellement reçu dans un évidement (22) dans l'une des deux parties de boîtier (11, 12), l'évidement (22) étant conçu de sorte qu'une liaison à verrouillage positif (30) soit formée entre l'élément d'étanchéité (20), qui est disposé dans l'évidement (22) d'une partie de boîtier (12), l'évidement (22) ayant la forme d'une rainure, et la section transversale de l'évidement (22) ayant un plan de symétrie (23) et étant au moins sensiblement rectangulaire et comprenant deux parois latérales planes (24, 25) à partir desquelles s'étendent deux élévations (27, 28) et les deux élévations (27, 28) étant espacées de la base de rainure (26),
**caractérisé**
**en ce que**, par rapport au plan de symétrie (23), l'élément d'étanchéité (20) comprend une sous-région (31) qui fait saillie hors de l'évidement (22), la sous-région (31) reposant, sur un côté opposé à une seconde partie de boîtier (12), contre une surface plane (32) d'une première partie de boîtier (11) et la sous-région (31) étant déformée en tonneau de sorte à générer l'action d'étanchéité,
**en ce que**, afin de former la liaison à verrouillage positif (30), la section transversale de l'évidement (22) s'élargit ou se rétrécit au moins dans les régions situées entre une région d'embouchure (29) de l'évidement (22) et une base de rainure (26).

2. Boîtier selon la revendication 1, **caractérisé en ce que** l'au moins une élévation (27, 28) se présente sous la forme d'une formation arrondie convexe.

3. Boîtier selon l'une des revendications 1 à 2, **caractérisé**
**en ce que** la base de rainure (26) est en forme de dôme convexe.

4. Boîtier selon l'une des revendications 1 à 3, **caractérisé**
**en ce que** l'évidement (22) est formé sur une paroi de boîtier (21) de la partie de boîtier (12), laquelle paroi de boîtier est, au moins dans la région de l'évidement (22), élastiquement déformable dans un plan perpendiculaire à l'évidement (22).

5. Boîtier selon l'une des revendications 1 à 4, **caractérisé**
**en ce que** l'élément d'étanchéité (20) ne comprend aucun agent adhésif.

6. Procédé de fabrication d'un boîtier (10) pour un moteur d'essuie-glace (100) selon l'une des revendications 1 à 5, dans une première étape de fabrication, une pièce de boîtier (12) dotée d'un évidement (22) étant fabriquée en plastique dans un processus de moulage par injection, et ultérieurement, un élément d'étanchéité (20) étant inséré dans l'évidement (22) dans une seconde étape de fabrication, **caractérisé**
**en ce que**, après la seconde étape de fabrication, l'élément d'étanchéité (20) est maintenu dans l'évidement (20) au moyen d'une liaison à verrouillage positif (30).

7. Procédé selon la revendication 6, **caractérisé**
**en ce que**, lors de la seconde étape de fabrication, pour former l'élément d'étanchéité (20), un élastomère liquéfié, thermoplastique non adhésif est injecté dans l'évidement (22).

8. Moteur d'essuie-glace (100) comportant un boîtier (10) selon l'une des revendications 1 à 5.
